**Europäisches Patentamt**

**European Patent Office**

**Office européen des brevets**

(19)

(11) Veröffentlichungsnummer: **0 001 455 B1**

(12) **EUROPÄISCHE PATENTSCHRIFT**

(21) Anmeldenummer: **78200134.1**

(22) Anmeldetag: **07.08.78**

(51) Int. Cl.³: **F 24 J 3/04**

(54) **Wärmepumpe für eine Heizungsanlage mit umlaufendem Wärmeträger**

(30) Priorität: **07.10.77 DE 2745108**

(43) Veröffentlichungstag der Anmeldung:
**18.04.79 Patentblatt 79/08**

(45) Bekanntmachung des Hinweises auf die Patenterteilung:
**12.11.80 Patentblatt 80/23**

(84) Benannte Vertragsstaaten:
**BE CH DE FR NL SE**

(56) Entgegenhaltungen:
**CH - A - 587 459**
**DE - A - 2 638 480**

(73) Patentinhaber: **ROBERT BOSCH GMBH**
**Postfach 50**
**D - 7000 Stuttgart 1 (DE)**

(72) Erfinder: **Erwin, Peter, Dipl.-Phys.**
**Im Steinriegel 54**
**D - 7317 Wendlingen (DE)**

Courier Press, Leamington Spa, England.

Wärmepumpe für eine Heizungsanlange mit umlaufendem Warmeträger

### Stand der Technick

Die Erfindung geht aus von einer Wärmepumpe nach der Gattung des Hauptanspruchs. Bei den bekannten Wärmepumpen dieser Art befindet sich trotz der Anordnung des zusätzlichen Wärmetauschers ein Teil des verflüssigten Kältemittels in Kontakt mit den Wärmeübertragungsflächenim Verflüssiger (DE-A-2 638 480). Das hat den Nachteil, daß das Kältemittel in den Betriebspausen der Wärmepumpe vom umlaufenden Wärmeträger beheizt werden kann, insbesondere wenn dieses von einer zweiten Wärmequelle der Heizungsanlage beheizt wird. In diesem Fall steigt die Temperatur des flüssigen Kältemittels und damit der Druck im Verflüssiger (Hochdruckteil der Wärmepumpe) an. Dieser kann unzulässig hohe Werte erreichen und zu Schäden an der Wärmepumpe führen.

### Vorteile der Erfindung

Die erfindungsgemäße Anordnung mit den kennzeichnenden Merkmalen des Hauptspruchs hat demgegenüber den Vorteil, daß in den Betriebspausen der Wärmepumpe das gesamte oder nahezu gesamte verflüssigte Kältemittel aus dem Verflüssiger in den susätzlichen Wärmetauscher fließt, so daß ein Wärmeaustausch mit dem Wärmeträger der Heizungsanlage nicht mehr stattfinden kann. Der Verflüssigungsdruck sinkt, weil in den Betriebspausen der Wärmepumpe das flüssige Kältemittel nicht mehr vom Wärmeträger warm gehalten wird. Dadurch wird die Gefahr der Rückverflüssigung im Verdichter geringer. Es kann auf das Rückschlagventil nach dem Verdichteraustritt verzichtet werden und ebenso ist das Magnetventil in der Flüssigkeitsleitung vor dem Entspannungsorgan nicht mehr nötig. Durch die kleinere Druckdifferenz zwischen Saug- und Druckseite des Verdichters ist automatisch eine Anfahrentlastung für den Verdichter gegeben.

Durch die in den Unteransprüchen aufgeführten Maßnahmen sind vorteilhafte Weiterbildungen und Verbesserungen der im Hauptanspruch angegebenen Anordnung möglich.

Besonders vorteilhaft ist es, die Unterkühlung des im Verflüssiger verflüssigten Kältemittels im Wärmetauscher vorzunehmen. Dadurch kann der Verflüssiger kleiner und billiger werden, weil die für die Unterkühlung sonst erforderliche Wärmeübertragungsfläche im Verflüssiger nicht mehr erforderlich ist.

Wenn nach einem weiteren Vorschlag der Erfindung der Wärmetauscher das vom Verdampfer kommende Sauggas überhitzt, kann der Verdampfer besser als bisher ausgenutzt und eine höhere Kälteleistung erzielt werden.

### Zeichnung

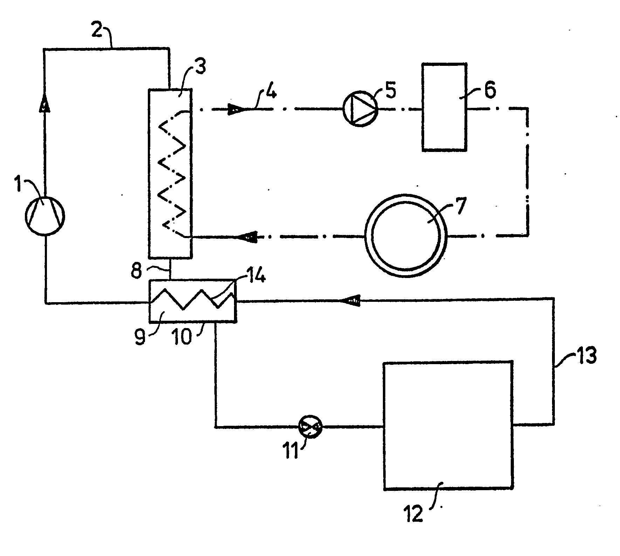

Ein Ausführungsbeispiel der Erfindung ist in der Zeichnung dargestellt und in der nachfolgenden Beschreibung näher erläutert. Die einzige Figur zeigt in schematischer Darstellung den Kältekreislauf der Wärmepumpe und das Leitungsnetz der von der Wärmepumpe versorgten bivalenten Heizungsanlage.

### Beschreibung der Erfindung

Von der Druckseite eines Verdichters 1 führt eine Hochdruckleitung 2 zu einem Verflüssiger 3, in welchem das Kältemittel im Wärmeaustausch mit dem Umlaufwasser einer Heizungsanlage 4 steht, deren Leitungsnetz über eine Pumpe 5, eine Zusatzheizung 6 und Heizkörper 7 führt. Vom Verflüssiger 3 geht eine Leitung 8 über aen Sammelraum 9 eines zusätzlichen Wärmetauschers 10 und ein Entspannungsorgan 11 in einen Verdampfer 12. An den Ausgang des Verdampfers 12 ist eine Niederdruckleitung 13 angeschlossen, die über eine Rohrschlange 14 im Sammelraum 9 des zusätzlichen Wärmetauschers 10 zur Saugseite des Verdichters 1 führt.

Der überhitzte Kältemitteldampf wird vom Verdichter 1 ohne Zwischenschaltung eines Rückschlagventils direkt in den Verflüssiger 3 gedrückt. Dort kühlt sich der Kältemitteldampf durch Abgabe sensibler Wärme an das Umlaufwasser de Heizungsanlage 4 bis zur Verflüssigungstemperatur ab. Danach erflogt die Verflüssigung unter Abgabe der latenten Wärme im Kältemitteldampf. Das verflüssigte Kältermittel läuft nun in den Sammelraum 9 des zusätzlichen Wärmetauschers 10 ab, wo es durch Wärmeaustausch mit dem Sauggas in der Rohrschlange 14 unterkühlt wird. Eine Unterkühlung des Kältemittels im Verflüssiger 3 findet nicht mehr statt, so daß der Verflüssiger 3 entsprechend kleiner gehalten ist. Der Sammelraum 9 des Wärmetauschers 10 ist so bemessen, daß in den Betriebspausen der Wärmepumpe das verflüssigte Kältermitell außer Kontakt mit der das Umlaufwasser der Heizungsanlage 4 führenden Rohrschlange kommt. Vom Wärmetauscher 10 gelangt das verflüssigte Kältemittel über das Entspannungsorgan 11 in den Verdampfer 12, und von dort im gasförmigen Zustand über eine Leitung 13 und die Rohrschlange 14 zum Verdichter 1. Dabei wird das gasförmige Kältemittel in der Rohrschlange 14 durch das aus dem Verflüssiger 3 austretende heiße flüssige Kältemittel überhitzt. Eine Überhitzung im Verdampfer 12 findet nicht mehr statt, so daß dieser besser ausgenutzt ist und eine höhere Kälteleistung erreicht wird.

### Patentansprüche

1. Wärmepumpe für eine Heizungsanlage mit umlaufendem Wärmeträger, bestehend aus Verdichter, Verflüssiger, Entspannungsorgan, Verdampfer und Wärmetauscher, in welchem das aus dem Verflüssiger austretende verflüssigte Kältemittel Wärme an das aus dem Verdampfer angesaugte gasförmige Kältemittel abgibt, dadurch gekennzeichnet, daß der Wärmetauscher (10) unterhalb vom Verflüssiger (3) angeordnet und als Sammler für das flüssige Kältemittel ausgebildet ist.

2. Wärmepumpe nach Anspruch 1, dadurch gekennzeichnet, daß die Unterkühlung des im Verflüssiger (3) verflüssigten Kältemittels in an sich bekannter Weise im Wärmetauscher (10) erfolgt.

3. Wärmepumpe nach Anspruch 1, dadurch gekennzeichnet, daß der Wärmetauscher (10) das vom Verdampfer (12) kommende Sauggas überhitzt.

4. Wärmepumpe nach Anspruch 1, dadurch gekennzeichnet, daß der das verflüssigte Kältemittel enthaltende Sammelraum (9) direkt mit dem Entspannungsorgan (11) verbunden ist.

### Claims

1. Heat pump for a heating system with a circulating heat transfer medium, comprising compressor, liquefier, expansion element, vaporizer and heat exchanger wherein the liquefied refrigerant emerging from the liquefier yields heat to the gaseous refrigerant drawn in from the vaporizer, characterised in that the heat exchanger (10) is disposed beneath the liquefier (3) and is designed as a collector for the liquid refrigerant.

2. Heat pump as claimed in claim 1, characterised in that the undercooling of the refrigerant liquefied in the liquefier (3) is effected in a manner known per se in the heat exchanger (10).

3. Heat pump as claimed in claim 1, characterised in that the heat exchanger (10) superheats the suction gas coming from the vaporizer (12).

4. Heat pump as claimed in claim 1, characterised in the the collecting chamber (9) containing the liquefied refrigerant is directly connected to the expansion element (11).

### Revendications

1. Pompe à chaleur pour une installation de chauffage avec un support de chaleur en circulation, consistant en un compresseur, un condenseur, un organe de détente, un évaporateur et un échangeur de chaleur, pompe à ehaleur dans laquelle le fluide réfrigérant liquéfié sortant du condenseur cède de la chaleur au fluide réfrigérant gazeux aspiré à partir de l'évaporateur, pompe à chaleur caractérisée en ce que l'échangeur de chaleur (10) est disposé au-dessous du condenseur (3) et est prévu comme collecteur pour le fluide réfrigérant liquide.

2. Pompe à chaleur selon la revendication 1, caractérisée en ce que la surrefroidissement du fluide réfrigérant liquéfié dans le condenseur (3) s'effectue d'une manière connue en soi dans l'échangeur de chaleur (10).

3. Pompe à chaleur selon la revendication 1, caractérisée en ce que l'échangeur de chaleur (10) surchauffe le gaz aspiré en provenance de l'évaporateur (12).

4. Pompe à chaleur selon la revendication 1, caractérisée en ce que la chambre collectrice (9) contenant le fluide réfrigérant liquéfié est directement reliée avec l'organe de détente (11).

0 001 455